# EUROPEAN PATENT APPLICATION

(11) **EP 1 109 117 A1**
(43) Date of publication of application: **20.06.2001**
(21) Application number: 99124942.6
(22) Date of filing: 14.12.1999
(51) Int. Cl.: G06F 17/30

(54) **Method for converting table data between a database representation and a representation in tag language**

(71) Applicant: SUN MICROSYSTEMS, INC., Palo Alto, California 94303 (US)
(72) Inventor: Grobler, Dirk, 24537 Neumünster (DE); Janssen, Ocke, 20255 Hamburg (DE)
(74) Representative: Betten & Resch

(57) **Abstract**

The invention relates to a method of importing table data from a selected source document into a selected target document, said source document being at least partly written in a tag language and said target document being in a format accessible by a database software or vice versa, said method comprising: temporarily storing data of a selected source; analyzing the table structure of the temporarily stored source data; and generating a target table in accordance with the table structure of the source data.

## Description

### Field of the invention

The present invention relates to a method for the import and export of table data into a database, and more particularly, the invention relates to the import and export of table data the format of which is in accordance with a tag language, such as HTML, into or from a table of a database.

### Description of the related Art

Databases nowadays form a common tool used in connection with personal computers. Presently used personal computers very often not only have installed thereon software for the purpose of word processing, but also some kind of database software. Moreover, due to the enormous growth of the internet nowadays many personal computers are provided with some equipment which enables them to connect to the internet, such as a modem and some kind of communication software enabling them to connect to a server, to access internet pages and to display them by means of a browser software running on the computer. Such internet pages to be displayed by a browser usually are written in HTML which is a so-called tag language. Such tag languages use plain text commands preceding the content to be displayed in order to indicate the format in which the content should be displayed. Those commands, which are called tags, are interpreted by a software such as a browser, and based on the interpretation the browser software then displays the content of the document in accordance with the commands given by the tags.

The tags may for example cause the browser to display the content of a document in the form of a table. In this case the content is displayed in columns and rows in accordance with the tag commands.

Another tool for displaying, editing, and querying tables is a database software. A database software operates on documents which are stored and displayed as tables, those tables then can be queried for example by using the structured query language SQL, the contents of a document can be filtered, or the like. The tables in which data are stored in rows and columns and which are accessed by a database software are in accordance with a certain format which depends on the database software being used.

When in the following reference is made to the format of some data then this is to be understood in a broad sense, which means that term format may refer to any aspect in which the data is organized. Those aspects may include for example the conventions which parts in a sequence of data are to be interpreted as commands or instructions, how these commands should look like, and on the other hand which data of the sequence are to be regarded as user data or contents. It may also refer for example to the attributes defining the content of a table in terms of their style, their number of characters, or the like. The term "format" just means that there is some defined way of how some data is organized and how it is to be interpreted. Referring for example to "data in the HTML format" means that this data consists of tags preceeding some user data or "contents" in accordance with the conventions of HTML. Similarly the term "data in the rich text format" refers to some data where - like in the HTML format - user data or "contents" are anteceded by some tags, howewer, by tags different than the ones of HTML.

To the contrary, when in the following reference is made to the term "structure", then it usually refers to the way some data is organized in columns and rows, in other words, it refers to the structure of a table in terms of how it is organized in columns and rows.

The term "format of a table" therefore has in the following a slightly different meaning compared to the term "structure of a table". While the former may refer to any of the aspects of how the table data is organized, including its organization into columns and rows, the latter merely refers to the actual table structure in the sense of "where are the columns, where are the rows, how many of them do we have", and the like.

Since the formats of documents on which commonly available database software operates are different from the format of tag languages such as HTML, at present there is no possibility to facilitate an easy exchange of data between documents written in a tag language, such as HTML, and documents which are written in a format which is in accordance with some database software.

There are existing some HTML drivers based on the Open Database Connectivity (ODBC) which provides some kind of standard to which all manufacturers of database software have committed themselves. With such an ODBC driver for HTML a database software is able to access a table written in HTML and to produce a database view onto this document. This means that the database software using such an ODBC driver can access HTML documents as if they were written in the format of documents usually accessed by this database software, and by using the driver the database software can display those HTML documents in a view as if they would be files containing tables in the format provided and required by the database software.

This, however, only enables a user to view the content of a HTML file as if it would be a database file, the user can, however, not actually import the HTML table into a table of his database software.

Moreover, using such an ODBC driver only enables the user to access a file written in HTML by his database software, however, the user cannot exchange data between documents of his database software and another application software running on his computer and presently accessing a HTML file.

It may for example happen to a user of a personal computer that he wishes to transfer some data which is displayed by the browser software on his PC into a file or a table to be accessed by the database software running on his computer. This can for example be the case if when surfing the net the user encounters some particularly interesting statistics or tables displayed on a certain website, which he then wishes to copy into a file to be accessed by his database software in order to have it stored therein for further processing, for combination with other data in the database, etc.

With the software presently available for personal computers it is not possible to copy or to import such data in an easy and user-friendly manner, and vice versa, it is not possible to export data from a database table into a HTML file or document. Rather than providing such import and export capabilities, the presently available software only provides the user with a "database view" onto a HTML document, it does, however, not offer the user to actually import and export documents or parts of documents between documents written in HTML and documents or tables written in accordance with the format required by a database software.

It is therefore an object of the present invention to provide the user a tool for carrying out the import into and the export from data of a database table, where the database table is in accordance with the format given by the database software, and where the exported or imported data has a format which is in accordance with a so-called tag language, such as HTML or the RTF format (Rich Text Format).

### Summary of the invention

In accordance with an aspect of the present invention, there is provided a method for importing table data which is in a tag language format, such as HTML, into the table of a database file of a database software. This is accomplished by selecting the source of the table data to be imported and the target of the import, by temporarily storing data of the selected source, analyzing the table structure of the temporarily stored source data, and by finally generating a target table in accordance with the table structure of the source data.

Selecting the source data can be carried out by selecting a source file by means of the mouse and the cursor, or by selecting some part of a source document by means of the mouse and the cursor or by the keyboard, to thereby copy the selected part into the clipboard. The transfer of the data into the target file or the target document may also be carried out by using the mouse and the cursor, either by a drag-and-drop process to drag the selected passage into the target location and to drop it there, or by using the copy and paste functions provided by the clipboard.

In order to adapt or to convert the source data format (including the table structure of the source) to the format of the target document, a conversion is performed which recognizes the tags of the tag language, identifies some elements of the source document as table elements, analyzes the table structure of the source document to identify the columns and rows of the table as well as their content (the table fields or elements), then extracts the content of the table elements, and finally inserts those contents into an empty target data structure of the database software which in its (table) structure is in accordance with the table structure of the source data as obtained from the analysis of the format of the source document.

A similar process may also be carried out into the opposite direction, in this case the user may select some data from a database file or a database table, this data is then dragged and dropped into a HTML file or a HTML document, or it is moved thereto by means of the clipboard functions. Also in this case a format conversion takes place, however, rather than extracting the tags of the tag language the conversion consists in generating tags which provide a table structure in accordance with the structure of the table from which the source data was selected.

The great advantage and utility of the present invention lies in the fact that it provides the user with a possibility to import and export table data to and from a database file or a database table in a very easy and convenient manner. Using the drag-and-drop function or the copy and paste clipboard function makes it very easy for the user to integrate HTML table data into his database tables accessed by his database software. Similarly the user can easily export data from tables of his database into HTML documents to make use of tables he has created with his database software when for example designing a new webpage.

The present invention further has the advantage that it provides the user with the capability to import and export any table data written in a tag language into and from the table of a database. The invention provides an easy and convenient tool for exchanging data between a source document and a target document, where the source document is written in a tag language and the target document is in a format in accordance with the requirements of a database software, or vice versa. Not only whole documents but also parts of documents can be imported and exported, even between documents which at the same time are accessed by different application programs, such as a table accessed by a database software and a webpage accessed by a web browser. While viewing an internet page and while at the same time accessing a database table by his database software, the user can exchange table data between the web page and the database document just by using a drag-and-drop operation or the copy and paste function of the clipboard.

### Brief description of the drawings

The accompanying drawings illustrate preferred embodiments of the invention and, together with the description, serve to explain the principles of the invention.

Fig. 1 schematically shows a configuration of a computer system to be used in accordance with a preferred embodiment of the present invention.

Fig. 2 shows an initial window of a software tool in accordance with a preferred embodiment of the present invention.

Fig. 3 shows a window in which a target for an import process has been selected.

Fig. 4 shows a window offering user settings in accordance with a preferred embodiment of the invention.

Fig. 5 shows a further window for inputting user settings in accordance with a preferred embodiment of the invention.

Fig. 6 shows the result of an input process in accordance with a preferred embodiment of the present invention.

Fig. 7 shows a schematic illustration of a software tool in accordance with the present invention interacting with a source and a target.

Fig. 8 schematically shows the components of a software tool for data import in accordance with a preferred embodiment of the present invention.

Fig. 9 shows components of a software tool for data export in accordance with a preferred embodiment of the invention.

### Detailed description of the preferred embodiments

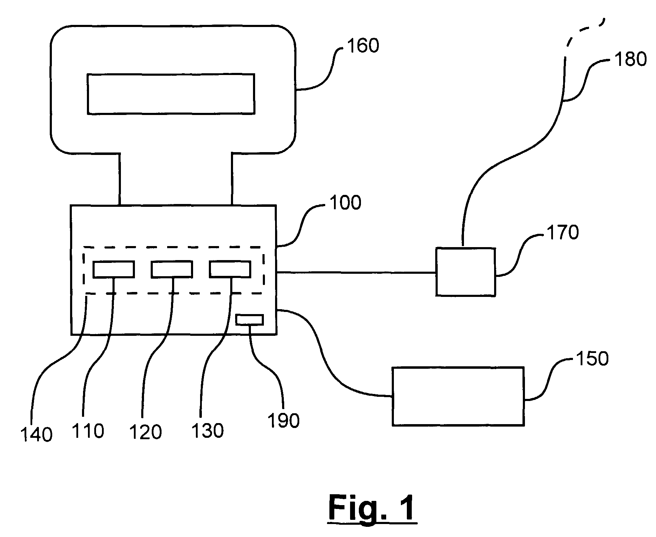

Fig. 1 shows a block diagram of a computer system in accordance with a preferred embodiment of the present invention. Computer 100 has running on it several application programs 110, 120, and 130, as well as an operating system 140. The personal computer 100 is connected to a monitor 160, it further is connected to a mouse 150 and to a modem 170 which enables the computer to connect for example to the internet through a communication line 180. The computer 100 further includes an input device 190 for reading a computer-usable medium having computer-readable program code means embodied therein. Input device 190 is, for example, a disk drive or a CD-ROM drive. The computer-usable medium is for example a floppy disk or a CD-ROM.

The computer 100 further includes a CPU and a memory which are not shown in Fig. 1 but the function of which is readily apparent to anybody skilled in the art. The CPU and the memory of the computer 100 enable the computer to carry out computer program instructions, such instructions are carried out when running on the computer an operating system 140 or application programs 110, 120, and 130.

Application program 110 is a database software which is used for creating, editing, displaying, modifying, and querying data stored in databases which are in accordance with some data format depending on the database software used. The database tables have a table structure which means that the data contained in a database table are arranged in columns and rows. An example of such a database software is StarBase, being the database software of the StarOffice software package of Sun Microsystems, Palo Alto, CA.

Application program 120 is any software which is capable of accessing and handling files which are in accordance with a so-called tag language, such as HTML. Tag languages use commands called tags which indicate the format of the data following the tag, or they define the action to be taken in connection with the data following a tag. For example the tag <FONT> defines the font to be used in connection with the data which follows the tag when displaying the data. Another example for such a tag language is the rich text format (RTF) which gives indications information on formats also by commands or tags being located in front of the data.

Application program 120 may for example be any browser capable of processing HTML files, such as the Internet Explorer produced by Microsoft Corporation, or the Netscape Communicator produced by Netscape Inc.

It will be readily apparent to the person skilled in the art that the configuration of Fig. 1 only is to be understood as an illustrative example, and that any other application software capable of handling data formatted according to a tag language and any other database software can be used as elements 110 and 120, as well as any computer 100 and any operating system 140 may be used in connection with the present invention.

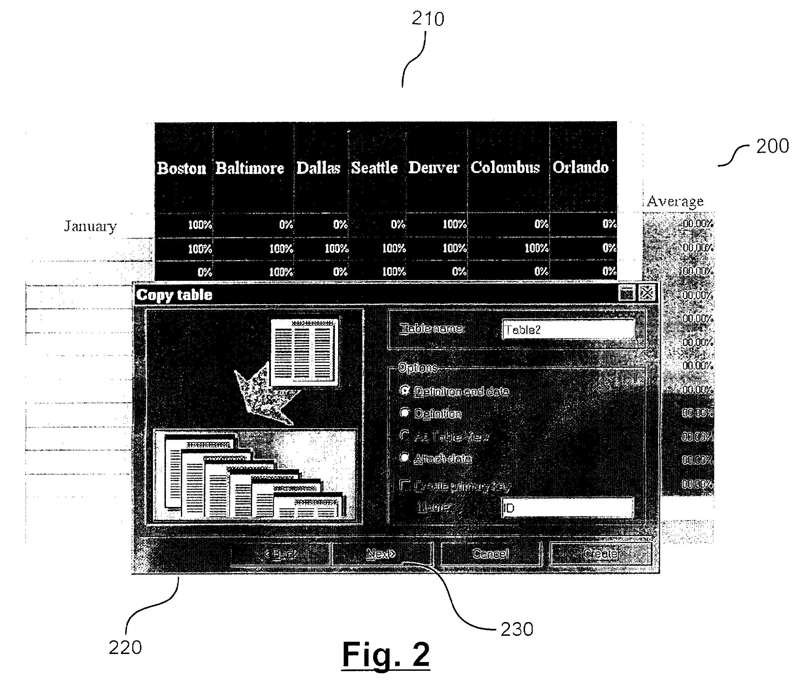

The user may now simultaneously use his database software 110 and his internet browser 120 on his computer 100, and it may happen that the document displayed by the browser 120 contains some table 200 as shown in Fig. 2.

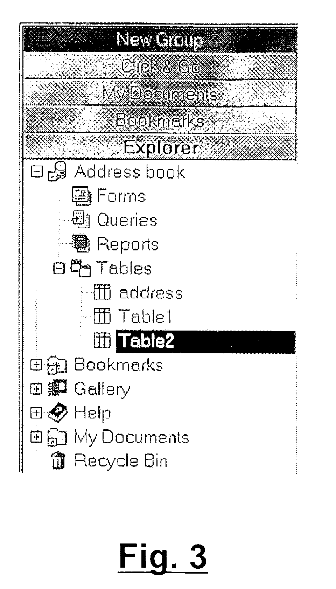

Fig. 2 shows table 200 as displayed by a browser software on the monitor of a computer. The source document of table 200 is written in the HTML format. The user may now wish to import a part of the table into a file or a table of his database software. The operation of such a process will be described in the following. By using mouse and cursor, the user can then select some part 210 of the table which will then be highlighted on the display. While holding the shift button and using the drag-and-drop function, the user can then drag the highlighted part into a target file or a target folder to be or being accessed by his database software, for example into the file "Table 2" as shown in Fig. 3. In this embodiment the target "Table 2" is a table container of the StarOffice Software produced by Sun Microsystems, Palo Alto, CA.

After the user has dragged and dropped the selected part into the target document a wizard dialogue comes up which provides the user with some further possibilities to select the manner in which the selected is to be imported into the target table of the database software. For this purpose as shown in Fig. 2 a pop-up window 220 shows up as the first page of the wizard dialogue. Therein the user can specify the table name, and he also can decide whether the definition as well as the data or whether only the definition is to be exported. If definition and data are selected, as shown in Fig. 2, then the table structure of the selected data as well as the content of the table of the selected part of the HTML source document will be copied into the target document. If only "definition" would be selected in window 220, then only the table format (the table structure) of the selected data 210 would be copied into the target document, in other words: an empty target document would be created the table structure of which is in accordance with the table structure of the source document.

Another option given by window 220 is to attach the selected data to the target document, which means that the selected source table data will be appended to a table already present in the target table or the target document.

Another option in window 220 is to select the creation of a primary key, which means that for each row of the selected table data 210 there will be created a primary key field which is filled out automatically. A primary key uniquely identifies a certain row (a dataset) in a database table. This is particularly useful when a table is being copied from a document containing no such primary key into a database file of a database software which requires such a primary key for further editing of the target document. An example of such a database software is the StarBase database module of the StarOffice Software Package of Sun Microsystems, Palo Alto, CA.

To carry out the import of the selected table the selected part of the source document is analyzed by a software module to recognize the individual rows and columns of the selected source data. This is carried out by identifying the tags in the source document to distinguish between data indicating the table format or the table structure and on the other hand data forming the content of the table. Thereby the individual entries of the data fields of table 210 can be recognized, as well as to which column and to which row of the table 210 they belong.

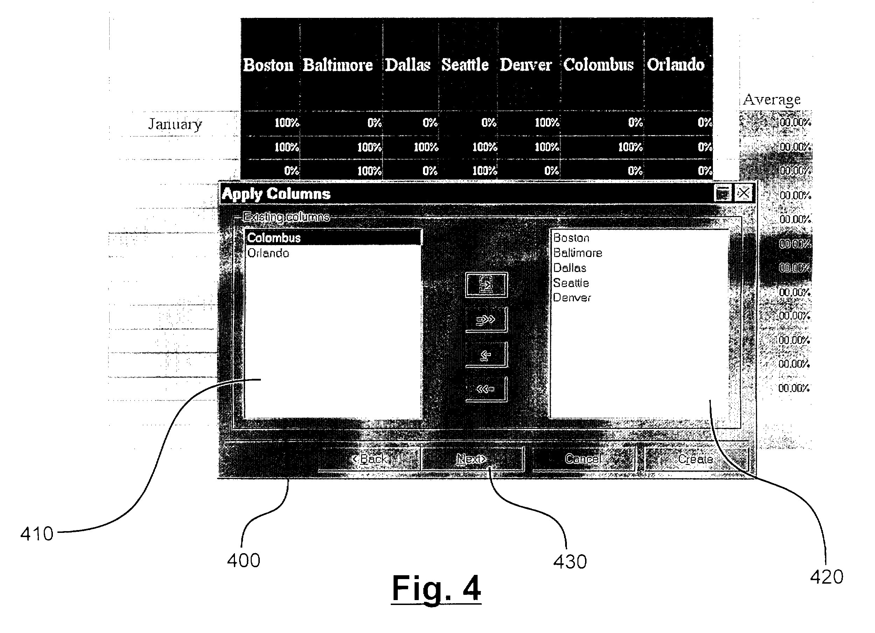

By clicking the "next"-button 230 of window 220 the user reaches the second page of the wizard dialogue which is shown in Fig. 4 as window 400. In part 410 of window 400 the columns of table 210 are listed, and by clicking onto the arrow buttons shown between parts 410 and 420 of window 400 the user can select the columns which are to be imported into the target table. The selected columns then are shown in the right-hand part 420 of window 400. In the present case shown in Fig. 4 the user has selected the columns Boston, Baltimore, Dallas, Seattle, and Denver to be imported into the target document.

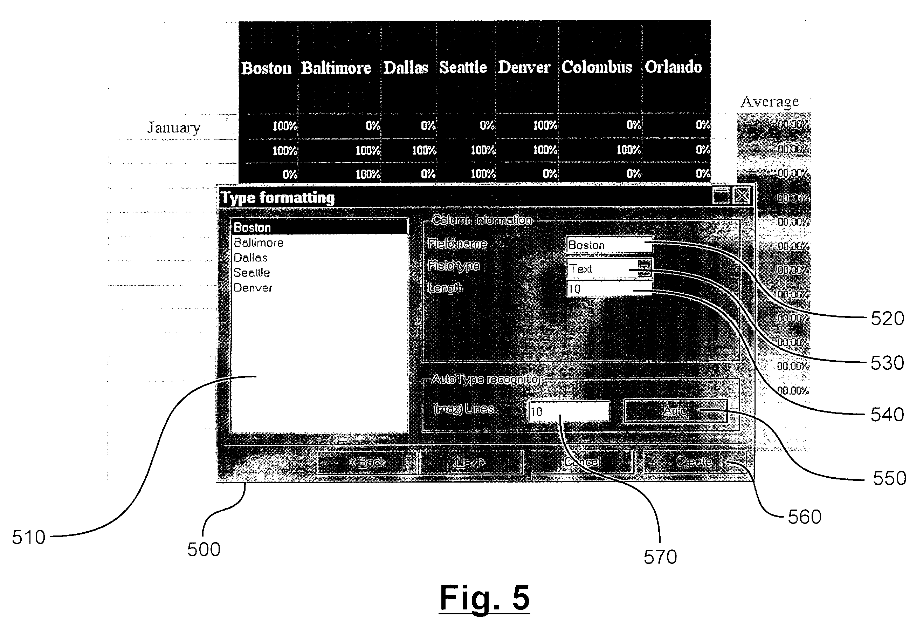

By clicking onto the "next"-button 430 of window 400 the user reaches a third page of the wizard dialogue which is shown as window 500 in Fig. 5. Therein the user can make some selections regarding the format of the individual columns selected in window 400.

In the left-hand part 510 of window 500 the headers of the selected columns are listed, the user can then by a mouse click select one of them and can choose or adjust some column information regarding the format, such as the field name 520, the field type 530, or the length of the field 540. By editing the field name 520 the user can amend the name shown therein, by using the pull-down menu of the field type indication 530 the user may amend the type of the fields of the column, and in part 540 the user can edit the length of the fields of the column belonging to the column header which presently is selected in the left-hand part 510 of the window 500.

By clicking the button 550 the user can start an automatic type recognition to be carried out for the selected source table data. In this case an automatic type recognition is run for a number of lines of the selected data as specified in field 560. If, as chosen in the example shown in Fig. 5, ten lines are selected, then an automatic type recognition process is run for ten rows of the selected table data 210. The automatic type recognition process recognizes different data types, such as text data, numbers, percentages, or the like. If no consistent type recognition can be carried out, then for the columns where some inconsistency arises, the text type will be selected.

If the user does not wish to give some special indications or to make some special selections as provided by the window 500 shown in Fig. 5, then he may already push the create button in window 400 of Fig. 4. In this case all the selected columns are adopted as text fields with a length of 255 characters as default.

Otherwise the user after having made his selections in window 500, may push the create button 570 of Fig. 5 which then causes the software module to create a table structure in the target document which is in accordance with the user's selections, and if the user in window 220 of Fig. 2 has chose the option "definition and data", then the so created table structure is filled with the contents of the individual data fields of the selected table. If the user has chosen only the option "definition", then an empty table structure will be created.

If the user has as a target of the import selected a folder, then within this folder a new target document will be created into which the imported source table data is written. If the target selected by the user is a file or an already opened document or table, then in this file or document/table there will be created a target table into which the imported source table data is written.

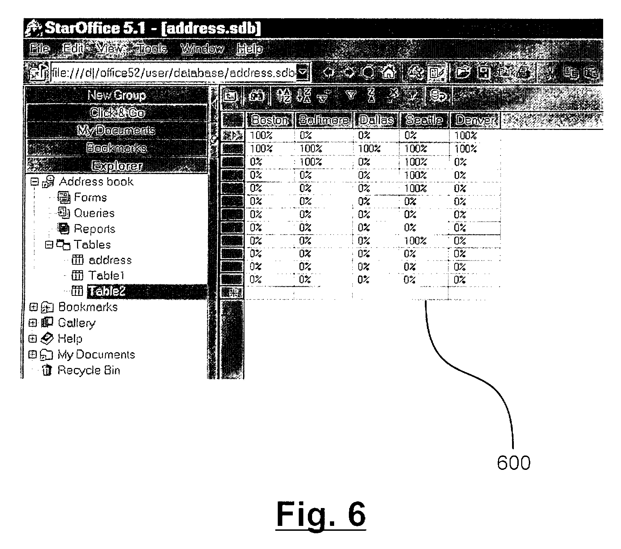

Fig. 6 shows the target document into which the table has been imported in accordance with the selections made by the user. Table 600 shown in Fig. 6 shows a display of a database table as seen by the user when displayed by the database software. Fig. 6 therefore shows the display of a target document or target table which is in a format as required by the database software displaying said document. The table displayed by the window shown in Fig. 6 is the target document or the target table into which the table data from the HTML source document has been imported by the procedure described before. As chosen by the second page 400 of the wizard dialogue the target table now contains the columns Boston, Baltimore, Dallas, Seattle, and Denver. If a creation of a primary key would also have been selected, then the shown table 600 would also contain a further column with the primary keys of the individual rows of table 600, in case the option to display the table with the primary key would have been selected by the database software. If the option not to display the primary key would have been selected, then also in this case the displayed document would look like as shown in Fig. 6.

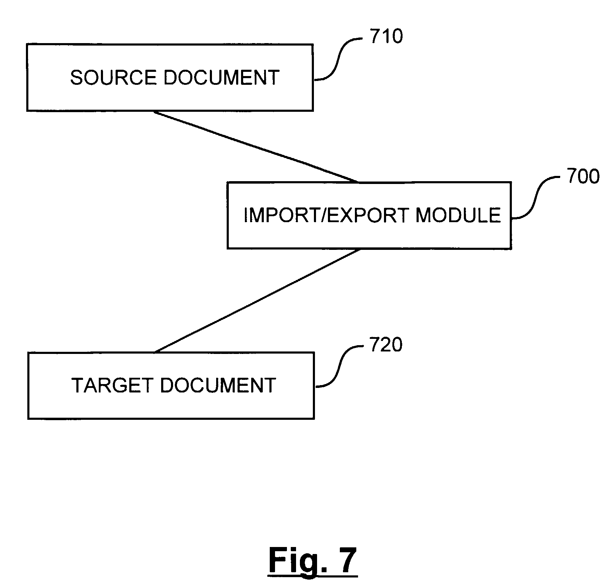

The import procedure as described before is performed by a software tool schematically shown in Fig. 7. The import/export module 700 imports data from a source document 710 into a target document 720 or a target table. It will be understood by those skilled in the art that the steps and actions carried out by a software tool formed by the import/export module 700 represent actions performed by the CPU of the computer in accordance with computer instructions of module 700. The operation of the import/export module 700 will be described in more detail hereinbelow. At first the operation of the module 700 will be described in connection with an import process where table data from a HTML file is imported into a document accessible by the database software.

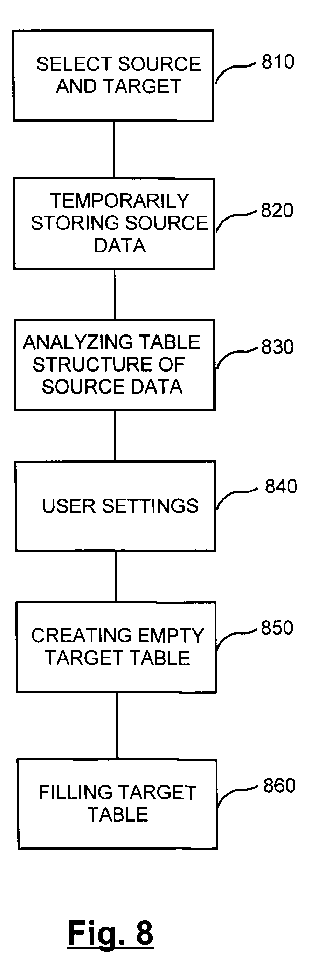

As shown in Fig. 8, there is provided a software module 810 for selecting the source and the target of the import. This is carried out by making use of the drag-and-drop function provided by the operating system of the computer, or by the clipboard function provided by the operating system of the computer. Those functions enable the user to select a source and a target of the import process by using the mouse or the keyboard of the computer. The source may either be a source document, a part of a source document, or a folder from which data is to be imported. Similarly, the target may either be a folder, a file (a document) or a certain location in a file (a document).

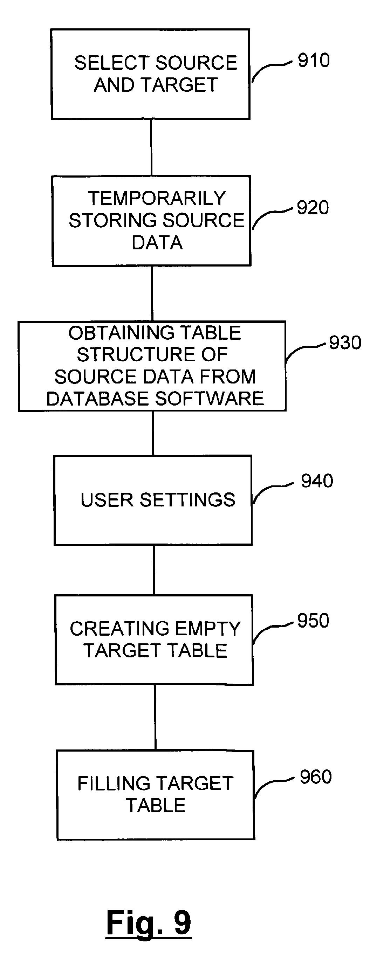

In the following the software tool 700 for importing and exporting table data is described in more detail in connection with Fig. 8 showing its individual components 810 to 860 for data import and in connection with Fig. 9 showing its individual components 910 to 960 for data export.

Software module 810 performs the selection of the source and the target of the import by using either a drag-and-drop operation or the clipboard functions which both are well-known to the skilled reader. After source and target of the import process have been selected, the source data selected by software module 810 is handed over to and temporarily stored by software module 820. Then software module 830 analyzes the table structure of the temporarily stored source data. This is carried out by parsing the source data for tags which indicate the table structure of the source data. The parsing process performed by software module 830 analyzes the table structure of the source data in order to identify the individual columns and rows contained in the source data, as well as in order to identify the contents of the columns and rows of the source data.

In case of the source table being in the HTML format, the source would at first be parsed for the tag <table> indicating the start of a table. The individual fields of a row of the table are then indicated by corresponding tags. The headers of the individual columns (the descriptors of the columns) are delimited by the tags <TH> indicating the start of a table header (a column descriptor) and by the tag </TH> indicating the end of a table header (a column descriptor). The table header "Boston" would then have the form <TH>Boston</TH>. A sequence of table headers in this manner indicates the column descriptors as the first row of a table.

Individual rows of a table are indicated by the tags <tr> indicating the start of a row and the tag </tr> indicating the end of a row.

Cells or fields of a row which are not column headers are delimited by the tags <td> indicating the start of a cell and by the tag </td> indicating the end of a cell. The table field "John Smith" would then have the form <td> John Smith </td>. The individual cells are grouped into rows of the table by the tags <tr> and </tr>. Between those two tags several fields may be inserted, each field being indicated by the tag pair <td> and </td> as explained before.

In this manner the table may be formed by a sequence of several rows. After the last row the table is then completed by the end tag </table>.

When analyzing such a table a parser then looks for the commands or tags indicating the individual cells or fields and the individual rows of a table, thereby obtaining the information how the table is structured into columns and rows.

The same principle applies for any other tag language where the structure of the table is indicated by tags which may look different then the ones of the example explained before, but which perform a similar function.

After the table of the source data has been analyzed by module 830, software module 840 offers the user to chose some settings. The user then can choose which source table columns recognized by module 830 actually are to be imported, furthermore the user can choose or modify data contained in the individual columns, the length of the data, and the like. The user may also choose whether the imported data is to be attached to a table already present in the target document, or whether a new target table should be created. The user may also choose an automatic type recognition to be performed in order to later create a target structure in accordance with the automatic type recognition.

Module 850 then creates an empty target table the structure of which is in accordance with the analyzing result obtained by module 830 and in accordance with the settings chosen by the user through module 840. The format of the target table created by module 850 is in accordance with the requirements of the database software such that the database software can access the target table.

Finally software module 860 fills the empty target table with the source data, which means that the contents of the fields of the source table are inserted into the empty target table. The target table filled by module 860 may either be a new target document/target table or it may be a table which is appended to another table already present in the target document selected by the user. If using the user settings module 840 the user has chosen to attach the imported data, then the target table will be a table appended or attached to a table already present in the target document or the target table selected by the user using module 810.

In connection with Fig. 8 there has been described the import of source data written in a tag language into a target document the format of which is in accordance with the format required by a database software. In connection with Fig. 9 there will now be described an opposite process of exporting data from a database document into a document which is written in a tag language, such as HTML or the rich text format (RTF).

Similarly to the import shown in Fig. 8 in case of the export shown in Fig. 9 software module 910 carries out the selection of the source and the target of the export process. This is performed in the same manner as described in connection with Fig. 8. The same holds for the temporary storage performed by module 920, which also functions in the same manner as module 820 of Fig. 8.

However, since in the case of the export of the data from a database document, the database software already is aware of the structure of the table to be exported, no parsing process as carried out by module 830 in case of the import has to be carried out in case of the export. Rather software module 930 obtains information about the table structure of the source table data from the database software, since the database software is aware of the attributes and the type of the data contained in the source table as well as of the structure of the source table. The corresponding source table structure is handed over to module 930.

Like in case of the import also in case of the export the user can choose some settings by module 940.

Software module 950 then creates an empty target table based on the table structure obtained from the database software through module 930 and based on the user settings carried out by the user using module 940. The target table is created by generating tag commands which define a target table structure being in accordance with the source table structure and the user settings.

Software module 960 then fills the so created target table with the table contents of the source data.

As described hereinbefore the invention provides the user with an easy and convenient tool for exchanging table data between two documents, one being in a format as required by a database software, and the other one being written in a tag language. The tag language can either be HTML, the rich text format (RTF), or any other tag language, such as XML, SML, Tex, Latex, or the like. The format of the database document may be any format used by a database software to operate on tables or table documents.

While the invention has hereinbefore been described in connection with certain embodiments, it is readily apparent to the skilled reader that certain modifications may be made to those embodiments. For example, in case of Fig. 9 modules 950 and 960 may be combined into a single module which creates a target table already containing the content which is to be exported into the target. In case of Fig. 8, it would as a modification also be possible to go directly from module 830 to module 850 without providing the option of user settings as provided by user settings module 840.

It should further be understood that the invention may be applied to tables written in any tag language, such as XML, SGML, Tex, Latex, or the like, the tag language indicating the structure of a table by plain text commands called tags.

As already mentioned, the invention can be implemented by a computer program comprising computer program code or application code. Application code or computer program code may be embodied in any form of a computer program product. A computer program product comprises a medium configured to store or transport computer-readable code, or in which computer-readable code may be embedded. Some examples of computer program products are CD-ROM disks, ROM cards, floppy disks, magnetic tapes, computer hard drives, servers on a network, and carrier waves. The computer program product may also comprise signals which do not use carrier waves, such as digital signals transmitted over a network (including the internet) without the use of a carrier wave. The computer program product may then be implemented as any transmission link, such as a connection to the internet, a LAN, a WAN, a public switched telephone network, or the like.

Moreover, the invention may be implemented in a client-server architecture, which means that some or all parts of a computer program are running on a server, and the remaining parts are running on a client. Through access to the server, the client may then in cooperation with the server implement a computer program embodying an implementation of the present invention.

The invention may further be implemented by a computer which is programmed such that it carries out a method as explained hereinbefore. Such a computer may be realized either by being programmed through a sequence of program instructions to carry out such a method, or it may be configured by dedicated hardware such that it carries out a method explained hereinabove.

While the present invention has been described in connection with preferred embodiments thereof, it will be readily recognized by those skilled in the art that those embodiments are for exemplary purposes only without limiting the spirit and scope of the present invention.

## Claims

1. A method of importing table data from a selected source document into a selected target document, said source document being at least partly written in a tag language and said target document being in a format accessible by a database software, said method comprising:
temporarily storing data of a selected source;
analyzing the table structure of the temporarily stored source data; and
generating a target table in accordance with the table structure of the source data.

2. The method of claim 1, wherein said selection of the source and the target of the import is performed by a drag-and-drop operation or by using the clipboard.

3. The method of claim 1, further comprising:
generating a target table in accordance with definitions selected by the user.

4. The method of claim 1, further comprising:
performing an automatic recognition of the format and/or the type of the table entries in the source data.

5. The method of claim 1, wherein
said source data is either in the HTML format or in the rich text format (RTF).

6. A method of exporting table data from a selected source document into a selected target document, said source document being in a format accessible by a database software, said target document being at least partly written in a tag language, said method comprising:
temporarily storing data of the selected source;
obtaining the table structure of the temporarily stored source data;
generating a target table in accordance with the obtained table structure of the source data.

7. The method of claim 6, wherein said selection of the source and the target is performed by a drag-and-drop operation or by using the clipboard.

8. The method of claim 6, further comprising:
generating a target table in accordance with definitions selected by the user.

9. The method of claim 6, further comprising:
performing an automatic recognition of the format and/or the type of the table entries in the source data.

10. The method of claim 6, wherein
said source data is either in the HTML format or in the rich text format (RTF).

11. A software tool (700) for importing table data from a selected source document (710) into a selected target document (720), said source document being at least partly written in a tag language and said target document being in a format accessible by a database software, said software tool comprising:
a software module (820) for temporarily storing data of the selected source;
a software module (830) for analyzing the table structure of the temporarily stored source data; and
a software module (850) for generating a target table in accordance with the table structure of the source data.

12. The software tool of claim 11, wherein said selection of the source and the target of the import is performed by a drag-and-drop operation or by using the clipboard.

13. The software tool of claim 11, further comprising:
a software module (840) for generating a target table in accordance with definitions selected by the user.

14. The software tool of claim 11, further comprising:
a software module (840) for performing an automatic recognition of the format and/or the type of the table entries in the source data.

15. The software tool of to claim 11, wherein
said source data is either in the HTML format or in the rich text format (RTF).

16. A software tool (700) for exporting table data from a selected source document (710) into a selected target document (720), said source document being in a format accessible by a database software, said target document being at least partly written in a tag language, said software tool comprising:
a software module (920) for temporarily storing data of the selected source;
a software module (930) for obtaining the table structure of the temporarily stored source data;
a software module (950) for generating a target table in accordance with the obtained table structure of the source data.

17. The software tool of claim 16, wherein said selection of the source and the target is performed by a drag-and-drop operation or by using the clipboard.

18. The software tool of claim 16, further comprising:
a software module (940) for generating a target table in accordance with definitions selected by the user.

19. The software tool of claim 16, further comprising:
a software module (940) for performing an automatic recognition of the format and/or the type of the table entries in the source data.

20. The software tool of claim 16, wherein
said source data is either in the HTML format or in the rich text format (RTF).

21. A computer program product comprising computer program code (700) for importing table data from a selected source document into a selected target document, said source document being at least partly written in a tag language and said target document being in a format accessible by a database software, said computer program code comprising:
a computer program code portion (820) for temporarily storing data of the selected source;
a computer program code portion (830) for analyzing the table structure of the temporarily stored source data; and
a computer program code portion (850) for generating a target table in accordance with the table structure of the source data.

22. The computer program product of claim 21, wherein said selection of the source and the target of the import is performed by a drag-and-drop operation or by using the clipboard.

23. The computer program product of claim 21, wherein
said source data is either in the HTML format or in the rich text format (RTF).

24. A computer program product comprising computer program code (700) for exporting table data from a selected source document (710) into a selected target document (720), said source document being in a format accessible by a database software, said target document being at least partly written in a tag language, said computer program code comprising:
a computer program code portion (920) for temporarily storing data of the selected source;
a computer program code portion (930) for obtaining the table structure of the temporarily stored source data;
a computer program code portion (950) for generating a target table in accordance with the obtained table structure of the source data.

25. The computer program product of claim 24, wherein said selection of the source and the target is performed by a drag-and-drop operation or by using the clipboard.

26. The computer program product of claim 24, wherein
said source data is either in the HTML format or in the rich text format (RTF).

27. A computer program (700) for importing table data from a selected source document (710) into a selected target document (720), said source document being at least partly written in a tag language and said target document being in a format accessible by a database software, said computer program (700) comprising:
a computer program code portion (820) for temporarily storing data of the selected source;
a computer program code portion (830) for analyzing the table structure of the temporarily stored source data; and
a computer program code portion (850) for generating a target table in accordance with the table structure of the source data.

28. A computer program (700) for exporting table data from a selected source document (710) into a selected target document (720), said source document being in a format accessible by a database software, said target document being at least partly written in a tag language, said computer program comprising:
a computer program code portion (920) for temporarily storing data of the selected source;
a computer program code portion (930) for obtaining the table structure of the temporarily stored source data;
a computer program code portion (950) for generating a target table in accordance with the obtained table structure of the source data.

29. A computer programmed such that it is capable of carrying out a method of importing table data from a selected source document into a selected target document, said source document being at least partly written in a tag language and said target document being in a format accessible by a database software, said method comprising:
temporarily storing data of the selected source;
analyzing the table structure of the temporarily stored source data; and
generating a target table in accordance with the table structure of the source data.

30. A computer programmed such that it is capable of carrying out a method of exporting table data from a selected source document into a selected target document, said source document being in a format accessible by a database software, said target document being at least partly written in a tag language, said method comprising:
temporarily storing data of the selected source;
obtaining the table structure of the temporarily stored source data;
generating a target table in accordance with the obtained table structure of the source data.

31. The computer program product of claim 21, wherein
at least a part of said computer program code is implemented on a server accessed by a client.

32. The computer program product of claim 24, wherein
at least a part of said computer program code is implemented on a server accessed by a client.
